# EUROPÄISCHE PATENTANMELDUNG

(11) **EP 1 179 943 A1**
(43) Veröffentlichungstag der Anmeldung: **13.02.2002**
(21) Anmeldenummer: 01118997.4
(22) Anmeldetag: 06.08.2001
(51) Int. Cl.: H04M 1/04, H02J 7/00

(54) **Tischlader für Mobilfunkgeräte**

(30) Priorität: 07.08.2000 DE 10038438
(71) Anmelder: SIEMENS AKTIENGESELLSCHAFT, 80333 München (DE)
(72) Erfinder: Nussbächer, Hans-Klaus, 80809 München (DE); Stögmüller, Rupert, 81739 München (DE)

(57) **Zusammenfassung**

Der Tischlader besitzt in seinem Bodenteil einen einer Steckaufnahme des Mobilfunkgerätes entsprechenden Stecker, wobei der Stecker in einer mittels einer Klappe verschließbaren Mulde angeordnet ist. Die Klappe dient im aufgeklappten Zustand als Stützvorrichtung für das Mobilfunkgerät und kann im aufgeklappten Zustand durch Druck über ihre definierte Endlage hinaus um einen vorgegebenen Winkel ausgelenkt werden.

## Beschreibung

Die vorliegende Erfindung betrifft einen Tischlader für Mobilfunkgeräte, welcher in seinem Bodenteil einen einer Steckaufnahme des Mobilfunkgerätes entsprechenden Stecker aufweist.

Bekannte Tischlader der eingangs genannten Art besitzen einen Aufnahmeschacht, welcher zur Führung des Mobilfunkgerätes während des Einsteckvorgangs dient und welcher danach eine Stützfunktion für das Mobilfunkgerät übernimmt.

Derartige Aufnahmeschächte benötigen eine gewisse Tiefe um eine Führungs- und Stützfunktion übernehmen. Dadurch ergibt sich eine verhältnismäßig hohe Bauhöhe des Tischladers. Ein weiterer Nachteil der so aufgebauten Tischlader besteht darin, daß für jedes Mobilfunkgerät ein spezieller Tischlader, welcher den Außenabmessungen des Mobilfunkgerätes angepasst ist, notwendig ist.

Aufgabe der Erfindung ist es ein Tischlader der oben genannten Art anzugeben, welcher sich durch eine geringe Bauhöhe auszeichnet und der gleichzeitig für unterschiedliche Mobilfunkgeräte verwendbar ist.

Diese Aufgabe wird erfindungsgemäß dadurch gelöst, daß der Stecker in einer mittels einer Klappe verschließbaren Mulde angeordnet ist, dass die Klappe im aufgeklappten Zustand als Stützvorrichtung für das Mobilfunkgerät dient, und dass die Klappe im aufgeklappten Zustand durch Druck über ihre definierte Endlage hinaus um einen vorgegebenen Winkel auslenkbar ist.

Der erfindungsgemäße Tischlader zeichnet sich durch eine geringe Bauhöhe im nicht aktiven Betrieb aus, in welchem die Mulde durch die Klappe verschlossen ist. Dadurch wird während des Transports ein Schutz des Steckers gewährleistet. Da die Stützfunktion bei dem erfindungsgemäßen Tischlader lediglich durch die obere freie Kante der Klappe übernommen wird, können Mobilfunkgeräte mit unterschiedlichen Außenabmessungen verwendet werden.

Dadurch, dass die Klappe bei dem erfindungsgemäßen Tischlader im aufgeklappten Zustand über ihre definierte Endlage hinaus um einen vorgegebenen Winkel auslenkbar ist, ist gewährleistet, dass beim Aufschieben des Mobilfunkgerätes auf den Stecker des Tischladers ein vorn und hinten schräg verlaufender Einführbereich zur Verfügung ist.

Vorteilhafte Ausgestaltungen des erfindungsgemäßen Tischladers ergeben sich aus den Unteransprüchen sowie aus der nachfolgenden Beschreibung eines Ausführungsbeispiels eines erfindungsgemäßen Tischladers anhand der beigefügten Zeichnungen.

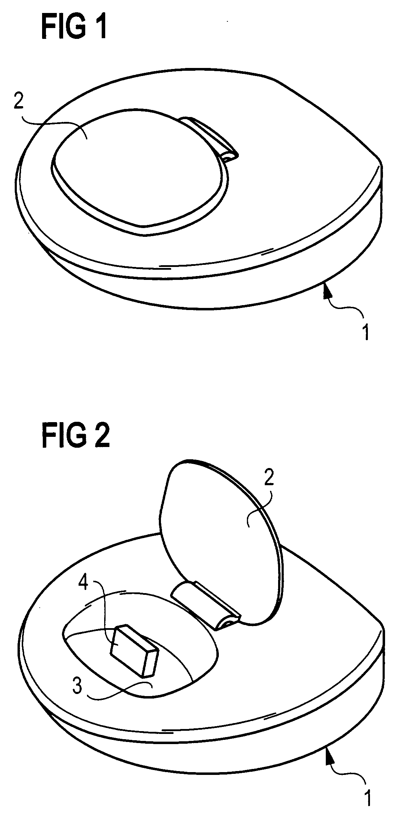

Es zeigen
Figur 1 eine perspektivische Ansicht eines erfindungsgemäßen Tischladers mit zugeklappter Klappe,
Figur 2 eine perspektivische Ansicht des Tischladers gemäß der vorliegenden Erfindung mit aufgeklappter Klappe,

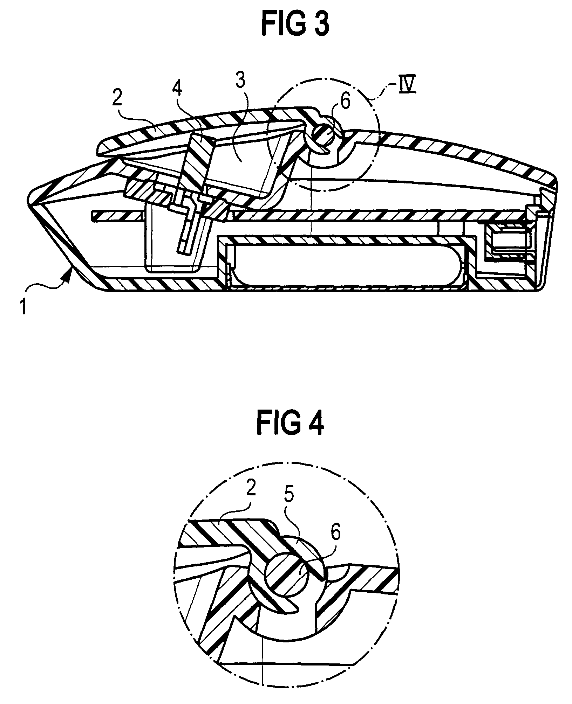

Figur 3 einen Querschnitt durch den Tischlader gemäß der vorliegenden Erfindung mit geschlossener Klappe,
Figur 4 eine Detailansicht von Figur 3,

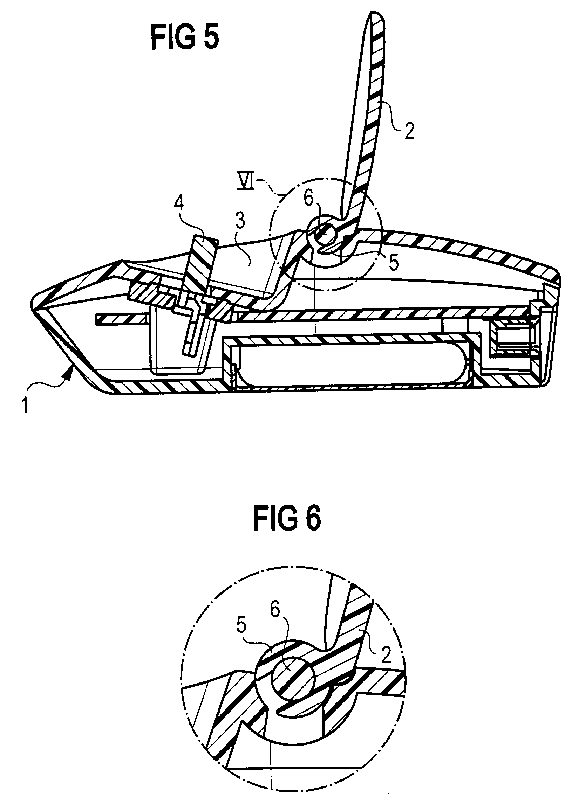

Figur 5 einen Querschnitt durch den erfindungsgemäßen Tischlader mit offener Klappe,
Figur 6 eine Detailansicht von Figur 5,
Figur 7 perspektivische Ansicht des erfindungsgemäßen Tischladers mit aufgestecktem Mobilfunkgerät von vorne, und
Figur 8 eine perspektivische Ansicht eines Tischladers gemäß der vorliegenden Erfindung mit aufgestecktem Mobilfunkgerät von hinten.

In den Figuren ist ein Ausführungsbeispiel eines erfindungsgemäßen Tischladers 1 dargestellt, welcher sich im wesentlichen dadurch auszeichnet, das er sehr flach gebaut ist.

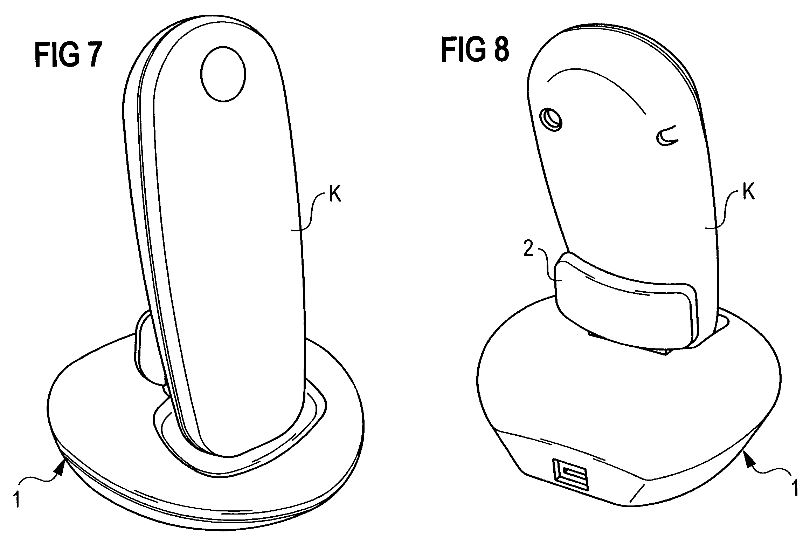

Der Tischlader verfügt über eine Mulde 3, in welcher ein Stecker 4 angeordnet ist, welcher der entsprechenden Steckaufnahme eines aufzuladenden Mobilfunkgerätes entspricht. Während des Transport des Tischladers ist dieser Stecker 4 durch die verschlossene Klappe 2 vor Verunreinigungen, Beschädigungen usw. geschützt. Im aufgeklappten Zustand der Klappe 2 dient diese als Stützvorrichtung für ein einzufügendes Mobilfunkgerät K (siehe Figuren 7 und 8).

Dadurch, dass zur eigentlichen Stützfunktion lediglich die obere freie Kante der Klappe 2 im aufgeklappten Zustand verwendet wird, ist der erfindungsgemäße Tischlader weitgehend unabhängig von der Bauform der zu ladenden Mobilfunkgeräte. Dies ist ein wichtiger Vorteil, da der gleiche Tischlader für unterschiedliche Mobilfunkgeräte verwendet werden kann.

Um beim Aufstecken des Mobilfunktgerätes auf den in der Mulde 3 des Tischladers angeordneten Steckers 4 sowohl eine Toleranz in einem nach vorne gerichteten Kippbereich als auch eine Toleranz in einem nach hinten geneigten Kippbereich zu ermöglichen, ist die Klappe 2 im aufgeklappten Zustand durch Druck über ihre definierte Endlage hinaus um einen vorgegebenen Winkel auslenkbar.

Diese Auslenkung wird dadurch möglich gemacht, das die angeschlagene Seite der Klappe 2 eine Achse 6, um welche die Klappe 2 drehbar ist, gabelförmig umfaßt. Auf diese Weise besteht die Möglichkeit, dass bei einem Druck gegen die Klappe 2 im aufgeklappten Zustand durch das gabelförmige Umgreifen ein gewisses Nachgeben der Schenkel der gabelförmigen Umgreifung möglich ist, ,und so die Klappe über ihre definierte entlage hinaus bewegt werden kann.

## Patentansprüche

1. Tischlader für Mobilfunkgeräte, welcher in seinem Bodenteil einen einer Steckaufnahme des Mobilfunkgerätes entsprechenden Stecker aufweist, **dadurch gekennzeichnet, dass** der Stecker in einer mittels einer Klappe verschließbaren Mulde angeordnet ist, dass die Klappe im aufgeklappten Zustand als Stützvorrichtung für das Mobilfunkgerät dient und dass die Klappe im aufgeklappten Zustand durch Druck über ihre definierte Endlage hinaus um einen vorgegebenen Winkel auslenkbar ist.

2. Tischlader nach Anspruch 1, **dadurch gekennzeichnet, dass** die Klappe um eine Achse schwenkbar ist, welche von dem angeschlagenen Teil der Klappe gabelförmig umgriffen wird.
